(19) Europäisches Patentamt
European Patent Office
Office européen des brevets

(11) Publication number: **0 329 329 A2**

(12) # EUROPEAN PATENT APPLICATION

(21) Application number: 89301217.9

(51) Int. Cl.4: C08F 4/42

(22) Date of filing: 08.02.89

(30) Priority: 18.02.88 GB 8803764

(43) Date of publication of application: 23.08.89 Bulletin 89/34

(84) Designated Contracting States: AT BE CH DE ES FR GB IT LI NL SE

(71) Applicant: IMPERIAL CHEMICAL INDUSTRIES PLC
Imperial Chemical House Millbank
London SW1P 3JF(GB)

(72) Inventor: Pickering, Anthony
76 Beech View Road
Kingsley Cheshire(GB)
Inventor: Thorne, Andrew John
17 Ellsemere Avenue
Upton Chester CH2 2DA(GB)
Inventor: Runciman, Peter James Inglis
122 Dicksons Drive
Newton Chester CH2 2BX(GB)

(74) Representative: Stephenson, Kenneth et al
Imperial Chemical Industries PLC Legal Department: Patents PO Box 6 Bessemer Road
Welwyn Garden City Herts, AL7 1HD(GB)

(54) **Polymerisation process.**

(57) A polymerisation process which comprises contacting at least one polar acrylic type or maleimide monomer under polymerisation conditions with (i) a tetracoordinate organosilicon, organotin or organogermanium initiator having at least one initiating site, (ii) a co-catalyst which is a source of fluoride, bifluoride, cyanide or azide ions or a Lewis acid, and (iii) an agent capable of interacting with the anion of the co-catalyst.

EP 0 329 329 A2

## POLYMERISATION PROCESS

This invention relates to a polymerisation process and more particularly to a process for polymerising polar olefinic monomers.

The group transfer polymerisation of acrylic type and maleimide monomers using certain organosilicon, organotin or organogermanium initiators and co-catalysts which are Lewis acids or sources of fluoride, bifluoride, cyanide or azide ions has been described in United States Patents No 4414372 and 4417034. The products are said to be "living" polymers by which is meant polymers which contain at least one active terminal group and are capable of polymerising further in the presence of monomer(s) and co-catalyst.

Whilst solvents are said to be not essential, it is acknowledged in the above mentioned patents that they are beneficial in controlling temperature during the exothermic polymerisations. In fact, in the absence of solvents the rate of polymerisation is extremely high and hitherto the group transfer polymerisation technique has been of no practical value in bulk polymerisation processes.

It has now been found that the onset of polymerisation in group transfer polymerisation processes can be delayed by the presence of agents capable of interacting with the co-catalyst. By contrast, the rate of polymerisation cannot be satisfactorily controlled by merely reducing the concentration of the initiator or the co-catalyst.

Accordingly, the invention provides a polymerisation process which comprises contacting at least one polar acrylic type or maleimide monomer under polymerisation conditions with (i) a tetracoordinate organosilicon, organotin or organogermanium initiator having at least one initiating site, (ii) a co-catalyst which is a source of fluoride, bifluoride, cyanide or azide ions or a Lewis acid, and (iii) an agent capable of interacting with the anion of the co-catalyst.

Monomers which may be polymerised by the process of the invention include monomers of the formula:
$CH_2=C(Y)X$, or

: 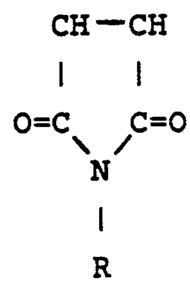

wherein:
X is CN, $-CH=CHC(O)X'$ or $-C(O)X'$;
Y is -H, $-CH_3$, -CN or $-CO_2R$, provided, however, when $X'$ is $-CH=CHC(O)X'$, Y is -H or $-CH_3$;
$X'$ is $-OSi(R^1)_3$, -R, -OR or $-NR'R''$; each $R^1$ independently is H or a hydrocarbyl radical which is an aliphatic, alicyclic, aromatic or mixed aliphatic-aromatic radical containing up to 20 carbon atoms, provided that at least one $R'$ group is not H;
R is a hydrocarbyl radical which is an aliphatic, alicyclic, aromatic or mixed aliphatic aromatic radical containing up to 20 carbon atoms, or a polymeric radical containing at least 20 carbon atoms, any of said radicals optionally containing one or more ether oxygen atoms within aliphatic segments thereof and optionally containing one or more functional substituents that are unreactive under polymerizing conditions, and optionally containing one or more reactive substituents of the formula:
$-Z'(O)C-C(Y^1)=CH_2$ wherein
$Y^1$ is H or $CH_3$ and $Z'$ is O or $NR'$;
and
each of $R'$ and $R''$ is independently selected from $C_{1-4}$ alkyl.

As indicated above in the definition of R in the formulas for the monomer, substituents having oxygen- nitrogen- or silicon-containing groups which are devoid of reactive hydrogen atoms under polymerizing conditions may be used. Groups such as $OSi(R^1)_3$ and $CONH_2$ are nonreactive under such conditions and therefore can be tolerated. On the other hand, groups such as $CO_2H$ and OH are reactive under polymerizing conditions. In order for monomers containing such groups on the R substituent to be useful in

the invention process, the groups must be chemically protected, i.e. deactivated. Monomers containing such deactivated groups are useful in the preparation of polymers which upon treatment to remove the protective group, have functional sites along the polymer chain. Monomers which contain sufficiently sterically hindered amine and alcohol groups that remain inert under reactive conditions may be used directly without deactivation.

Examples of specific monomers which may be used in the process of the invention include methyl methacrylate, butyl methacrylate; sorbyl acrylate and methacrylate, lauryl methacrylate; ethyl acrylate; butyl acrylate, acrylonitrile; methacrylonitrile; 2-ethylhexyl methacrylate; 2-(dimethylamino)ethyl methacrylate; 2-(dimethylamino)ethyl acrylate; 3-methacryloxypropyl acrylate; 2-acetoxyethyl methacrylate; p-tolyl methacrylate; 2,2,3,3, 4,4,4-heptafluorobutyl acrylate; methylene malononitrile; ethyl 2-cyanoacrylate,N,N-dimethyl acrylamide,4-fluorophenyl acrylate; 2-methylacryloxyethyl acrylate and linoleate; propyl vinyl ketone; ethyl 2-chloroacrylate; glycidyl methacrylate; 3-methoxypropyl methacrylate; 2[(1-propenyl)oxy]ethyl methacrylate and acrylate; phenyl acrylate; 2-(trimethylsiloxy)ethyl methacrylate,allyl acrylate; and methacrylate. Preferred monomers include methyl methacrylate; glycidyl methacrylate,sorbyl methacrylate; ethyl acrylate, butyl acrylate; sorbyl acrylate; 2-(trimethylsiloxy)ethyl methacrylate; 2-methacryloxyethyl acrylate, 2-acetoxyethyl methacrylate and 2-(dimethylamino)ethyl methacrylate. Methyl methacrylate is especially preferred.

Mixtures of two or more monomers may be used if desired.

Tetracoordinate organosilicon, organotin or organogermanium initiators which may be used in the process of the invention include any of those disclosed in United States Patents 4414372 and 4417034 or in European Patent publications 191641 and 194110, the disclosures of which are incorporated herein by reference.

Examples of specific initiators which are useful in the invention process include [(1-methoxy-2-methyl-1-propenyl)oxy]trimethylsilane; 2-(trimethylsilyl)isobutyronitrile; ethyl 2-(trimethylsilyl)acetate: methyl 2-methyl-2-(tributylstannyl)propanoate; [(2-methyl-1-cyclohexenyl)oxy]tributylstannane; trimethylsilyl nitrile; methyl 2-methyl-2-(trimethylgermanyl)propanoate; [4,5-dihydro-2-furanyl)oxy]trimethylsilane; [(2-methyl-1-propenylidene)bis(oxy)]bis[-trimethylsilane]; [(2-methyl-1-[2-(methoxymethoxy)ethoxy]-1-propenyl)oxy]-trimethylsilane; methyl [(2-methyl-1-(trimethylsilyloxy)-1 propenyl)oxy]acetate; [(1-(methoxymethoxy)-2-methyl-1-propenyl)oxy]trimethylsilane; trimethyl a,a′a″-tris(trimethylsilyl)-1, 3, 5-benzenetriacetate; dimethyl a, a′-bis(trimethylsilyl)-1,3-benzenediacetate; [1,6-dimethoxy-1,5-hexadiene-1,6-diylbis(oxy)]bis-[trimethylsilane]; [(2-ethyl-1-propoxy-1-butenyl)oxy]ethyldimethylsilane; ethyl 2-(trimethylstannyl)propanoate; [(1-cyclohexenyl)oxy]trimethyl- stannane [(2dimethyl-1-butenylidene)bis(oxy)]bis[trimethylsilane]; 2-(trimethylsilyl)propanenitrile; ethyl(trimethylgermanyl)acetate; [(1-((1-dec-2-enyl)oxy)-2-methyl-1-propenyl)-oxy]trimethylsilane; phenyl 2-methyl-2-(tributylstannyl)propanoate; methyl 2-(triethylsilyl)acetate; dimethyl 2,5-bis(trimethylgermanyl)hexanedioate; [(2-methyl-1-cyclohexenyl)oxy]tributylstannane; [(1-methoxy-2-methyl-1-propenyl)oxy]phenyldimethylsilane; and [(2-methyl-1-[2-(trimethylsiloxy)ethoxy]-1-propenyl)oxy]-trimethylsilane. Preferred initiators include[(1-methoxy-2-methyl-1-propenyl)oxy]trimethylsilane.

Suitable concentrations of initiator are generally such that the monomer/initiator molar ratio is greater than 1, preferably greater than 5.

The co-catalysts used in the invention process are either known compounds or can be prepared by known methods from known compounds. Suitable co-catalysts include zinc iodide, bromide, and chloride, mono- and dialkylaluminium halides, dialkylaluminium oxides, tris(dimethylamino)sulphonium difluorotrimethylsilicate, tris(dimethylamino)sulphonium cyanide, tris(dimethylamino)sulphonium bifluoride, tetraphenylarsonium cyanide, tris(dimethylamino)sulphonium azide, tetraethylammonium azide, bis-(dialkylaluminium)oxides, boron trifluoride etherate, alkali metal fluorides, bifluorides, cyanides, and azides, ammonium bifluoride, tris(dimethylamino)sulphoniumdifluorphenylstannate, tetrabutylammonium fluoride and bifluoride, tetramethylammonium fluoride and bifluoride tetraethylammonium cyanide and bifluoride and tetraphenylphosphonium bifluoride.

The co-catalyst is suitably present in an amount such that the molar ratio of initiator to co-catalyst is in the range 0.1 to 500, preferably 1 to 10.

Suitable agents capable of interacting with the anion of the co-catalyst include protic species having exchangeable protons which may be attached, for example, to oxygen, nitrogen, sulphur, phosphorus or carbon atoms. Examples of suitable protic species include compounds having equilibrium acidities ($pK_a$ values) in the range from 0 to 35 when measured in dimethyl sulphoxide solution at 25° C as described by F G Bordwell (Acc. Chem. Res., 1988, 21, 456-463). Such compounds have been described in Table II of Bordwell's paper. Particularly useful compounds have $PK_a$ values in the range 0-22 when measured by the above mentioned method. Preferred compounds include acetylacetone and hexamethylacetylacetone.

The method of the invention may suitably be performed at temperatures in the range from 0 to 100° C

but is preferaly performed at or about ambient temperature.

In one preferred form of the invention, the monomer, or mixture of monomers, is combined with the initiator, co-catalyst and agent capable of interacting with the co-catalyst in a suitable polymerisation vessel. The latter agent, which may usefully be present in a molar ratio of from 0.5 to 100 relative to the co-catalyst, can have the effect of delaying the onset of polymerisation for an induction period of several minutes depending upon the activity and concentration of the added agent. It is often useful for the polymerisation reaction mixture to contain minor amounts of acetonitrile to moderate the rate of polymerisation after completion of the induction period.

If desired, however, the agent capable of interacting with the anion of the co-catalyst may be added to a mixture of monomer, initiator and co-catalyst after the onset of polymerisation so as to moderate the polymerisation or to stop it for a time depending upon the activity and concentration of the added agent. In this case it is preferable for the reaction mixture to contain from 0.05 to 5.0% by weight, based on the weight of monomer, of acetonitrile in order that the initial polymerisation proceeds at a controllable rate. When the polymerisation has been stopped by addition of an agent capable of interacting with the co-catalyst, the dormant reaction mixture may be reactivated by the addition of more co-catalyst.

The "living" polymer obtained by the method of the invention may be converted to a non-living polymeric product by being contacted with an active hydrogen compound, for example water or an alcohol.

The method of the invention is particularly useful for the bulk polymerisation of acrylics at room temperature, optionally in the presence of fillers, for the production of sheets, rods etc.

Dispersion type polyacrylates may also be prepared.

The invention is illustrated but not limited by the following Examples.

## Example 1

### Polymerisation of methyl methacrylate (MMA) initiated by [(1-methoxy-2-methyl-1-propenyl)oxy]trimethyl silane (MTS) and tetrabutyl ammonium fluoride (TBAF) in the presence of acetylacetone (AcAc)

0.025 mM of TBAF, 5 mls of MMA (46.8 mmol) and 2 µl of AcAc (0.019 mmol) were added to a dry glass reaction vessel under $N_2$. Whilst stirring, 10 µl MTS (0.0496 mM) was added using a microlitre syringe. The polymerisation rate was followed by monitoring the temperature using a thermocouple.

For 7 minutes there was no significant temperature rise indicating minimal polymerisation.

There was then an exponential temperature rise to over 100°C over the next 6 mins when 95.3% of the monomer was converted to polymer. Mn 89887, Mn 143800, D.1.6.

## Examples 2-6

### Inducing an induction period

To a pre-dried Schlenk tube (under dry nitrogen) containing MTS (2.02 x $10^{-3}$ ml) and a protic species (as a 0.1M solution in tetrahydrofuran) was added MMA (5g). To the stirred reaction mixture was added the co-catalyst as a 0.1M solution in acetonitrile. The induction time was measured from the time of co-catalyst addition to a point at which there was a rise in temperature as measured by an immersed thermocouple.

When the polymerisation was compete, the polymer was dissolved in methylene chloride and precipitated into hexane. The yield was calculated and GPC performed (calibrated against polystyrene).

Results are given in the following Table, Example 2 being a comparative Example.

TABLE 1

| Example | CO-CATALYST 0.1M in $CH_3CN$ | INHIBITOR 0.1M in THF | INDUCTION PERIOD | Yield | Mn | Mw/Mn |
|---|---|---|---|---|---|---|
| 2 | TAS $F_2H$ 10µl | | 15 secs | 84.3% | 52930 | 1.6 |
| 3 | TAS $F_2H$ 10µl | $CH_2(CO_2Et)_2$ 5µl | 6.3 mins | 79.1% | 48200 | 1.9 |
| 4 | TAS $F_2H$ 10µl | $CH_2(CO_2Et)_2$ 5µl | 11.3 mins | 69.1% | 46680 | 1.7 |
| 5 | TBAF3$H_2O$ 5µl | imidazole 10µl | 8 mins | 87.2% | 56280 | 2.01 |
| 6 | TBAF3$H_2O$ 5µl | $Ph_2C=NOH$ 7µl | 10.3 mins | 83.4% | 59880 | 1.95 |

Examples 7-18

Inducing a dormancy period

Polymerisation was carried out as described in Examples 2-6 (using 5g MMA and 2.02 x $10^{-2}$ ml MTS) except that the protic species was added (as a 0.1M solution in tetrahydrofuran) after the start of polymerisation, either 30 seconds after onset of polymerisation or when the reaction temperature had reached 50 °C (see Table 2). The deceleration in polymerisation rate was recorded using a thermocouple. As the rate decreased, there was a corresponding reduction in the rate of heat evolution. The dormancy period was measured from the time of addition of protic species to the point at which the rate of polymerisation started to generate more heat.

The polymer was isolated as in Examples 2-6.

Results are given in the following Table.

TABLE 2

| Example | CO-CATALYST 0.1M in $CH_3CN$ | INHIBITOR 0.1M in THF | INHIBITOR | | Yield | Mn | Mw/Mn |
|---|---|---|---|---|---|---|---|
| | | | Addition Point/time | Dormancy period | | | |
| 7 | TBAF3$H_2O$ 5µl | $CH_2(CO_2Et)_2$ 15µl | 30 secs | 3.9 mins | 87.8% | 54620 | 1.48 |
| 8 | $TAS^+HF_2$ 10µl | $CH_2(CO_2Et)$ 15µl | 50 °C | 5.3 mins | 82.5% | 58101 | 1.59 |
| 9 | $TAS^+HF_2$ 10µl | $CH_2(CO_2Et)$ 5µl | 30 secs | 3.9 mins | 87.8% | 54620 | 1.43 |
| 10 | TBAF3$H_2O$ 5µl | PhOH 5µl | 30 secs | 5 mins | 72.3% | 51180 | 1.52 |
| 11 | TBAF3$H_2O$ 5µl | PhOH 10µl | 30 secs | 11.3 mins | 74.8% | 50230 | 1.49 |
| 12 | TBAF3$H_2O$ 5µl | $CH_2(CN)_2$ 2.5µl | 50 °C | 3 mins | 69.1% | 63650 | 1.8 |
| 13 | TBAF3$H_2O$ 5µl | $CH_2(CN)_2$ 6ul | 50 °C | 9 mins | 73.8% | 61256 | 1.72 |
| 14 | TBAF3$H_2O$ 5µl | Uracil 25µl | 30 secs | 11.3 mins | 73.2% | 55830 | 1.81 |
| 15 | $TBAN_3$ 10µl | $CH_2(CO_2Et)_2$ 15µl | 50 °C | 7.3 mins | 80.3% | 42690 | 2.05 |
| 16 | TBAF3$H_2O$ 5µl | $Bu^tOH$ 7µl | 30 secs | 9.6 mins | 81.6% | 55870 | 2.18 |
| 17 | TBAF3$H_2O$ 5µl | Acac 10µl | 30 secs | 5 mins | 90% | 56780 | 1.7 |
| 18 | TBAFAcAc10µl | $CH_2(CO_2Et)_2$ 10µl | 50 °C | 6 mins | 80% | 51320 | 1.6 |

Comparative Example

Two reaction tubes were charged with 5ml of purified MMA and 20µl of MTS under an atmosphere of nitrogen.

To one of the tubes was added 10µl of TBAF (0.1m mol/ml in tetrahydrofuran). An immediate exotherm was observed with consequential boiling of the monomer, The polymer was redissolved in methylene chloride and precipitated into hexane. The yield was assumed to be approximately 100% Mn 112,580 Mw

187,640 D 1.67.

To the other tube was added 3µl of the TBAF solution. Again, an immediate exotherm was observed but the reaction quickly eased giving a 2.7% conversion Mn 148,380, Mw 352,870, D2.38.

This comparative Example demonstrates the rapid and violent polymerisation which can take place in the absence of any moderating agent and the unsatisfactory conversion achieved by merely reducing the concentration of co-catalyst.

## Claims

1. A polymerisation process which comprises contacting at least one polar acrylic type or maleimide monomer under polymerisation conditions with (i) a tetracoordinate organosilicon, organotin or organogermanium initiator having at least one initiating site, (ii) a co-catalyst which is a source of fluoride, bifluoride, cyanide or azide ions or a Lewis acid, and (iii) an agent capable of interacting with the anion of the co-catalyst.

2. A process according to claim 1 wherein the monmer is of the formula:

$CH_2 = C(Y)X$, or

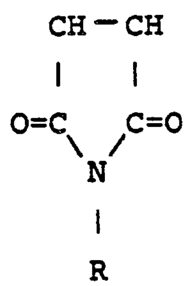

wherein:

X is CN, $-CH = CHC(O)X'$ or $-C(O)X'$;

Y is -H, $-CH_3$,-CN or $-CO_2R$, provided, however, when $X'$ is $-CH = CHC(O)X'$, Y is -H or $-CH_3$;

$X'$ is $-OSi(R^1)_3$, -R, -OR or $-NR'R''$; each $R^1$ independently is H or a hydrocarbyl radical which is an aliphatic, alicyclic, aromatic or mixed aliphatic-aromatic radical containing up to 20 carbon atoms, provided that at least one $R^1$ group is not H;

R is a hydrocarbyl radical which is an aliphatic, alicyclic, aromatic or mixed aliphatic aromatic radical containing up to 20 carbon atoms, or a polymeric radical containing at least 20 carbon atoms, any of said radicals optionally containing one or more ether oxygen atoms within aliphatic segments thereof and optionally containing one or more functional substituents that are unreactive under polymerizing conditions, and optionally containing one or more reactive substituents of the formula:

$-Z'(O)C-C(Y^1) = CH_2$ wherein

$Y'$ is H or $CH_3$ and $Z'$ is O or $NR'$

and

each of $R'$ and $R''$ is independently selected from $C_{1-4}$ alkyl.

3. A process according to claim 2 wherein the monomer is methyl methacrylate.

4. A process according to any preceding claim wherein the co-catalyst comprises tetrabutylammonium fluoride.

5. A process according to any preceding claim wherein the agent capable of interacting with the anion of the co-catalyst has a pKa value in the range 0 to 35 when measured in dimethyl sulphoxide solution at 25 °C.

6. A process according to claim 5 wherein the agent has a pKa value in the range 0 to 22.

7. A process according to claim 6 wherein the agent is acetylacetone.